# EUROPÄISCHE PATENTSCHRIFT

(11) **EP 2 054 255 B1**
(45) Veröffentlichungstag und Bekanntmachung des Hinweises auf die Patenterteilung: **14.09.2011**
(21) Anmeldenummer: 07817730.0
(22) Anmeldetag: 24.10.2007
(51) Int. Cl.: B60J 7/043

(54) **FÜHRUNGSSCHIENE**
GUIDE RAIL
RAIL DE GUIDAGE

(30) Priorität: 27.10.2006 DE 102006050848
(43) Veröffentlichungstag der Anmeldung: 06.05.2009
(73) Patentinhaber: Webasto AG, 82131 Stockdorf (DE)
(72) Erfinder: FÄRBER, Manfred, 82407 Wielenbach (DE); SEIFERT, Wolfgang, 82407 Wielenbach (DE); WINGEN, Bernhard, 83620 Feldkirchen (DE); BERGMILLER, Alexander, 86343 Koenigsbrunn (DE)
(74) Vertreter: Epping - Hermann - Fischer
(86) Internationale Anmeldenummer: PCT/DE2007/001896
(87) Internationale Veröffentlichungsnummer: WO 2008/049406

(56) Entgegenhaltungen:
- EP-A- 0 154 759
- EP-A- 1 216 869
- JP-A- 8 258 573

## Beschreibung

Die vorliegende Erfindung betrifft eine Führungsschiene zum Führen eines Schlittens in Längsrichtung eines Kraftfahrzeugdaches mit einem raumsparenden Querschnittsprofil.

Fahrzeugdächer, insbesondere bei Kraftfahrzeugen, weisen einen Fahrzeugdeckel auf, der mittels einer Deckelanhebekulisse angehoben wird. Die Deckelanhebekulisse steuert die Anhebebewegung des Fahrzeugdeckels, wobei der Deckel in der Regel aus einer geschlossenen Ruhestellung entgegen der Fahrtrichtung des Kraftfahrzeugs in eine sogenannte Lüfterstellung bewegt wird und von dort in eine geöffnete Stellung. Die Deckelanhebekulisse befindet sich dabei unterhalb des Fahrzeugdeckels.

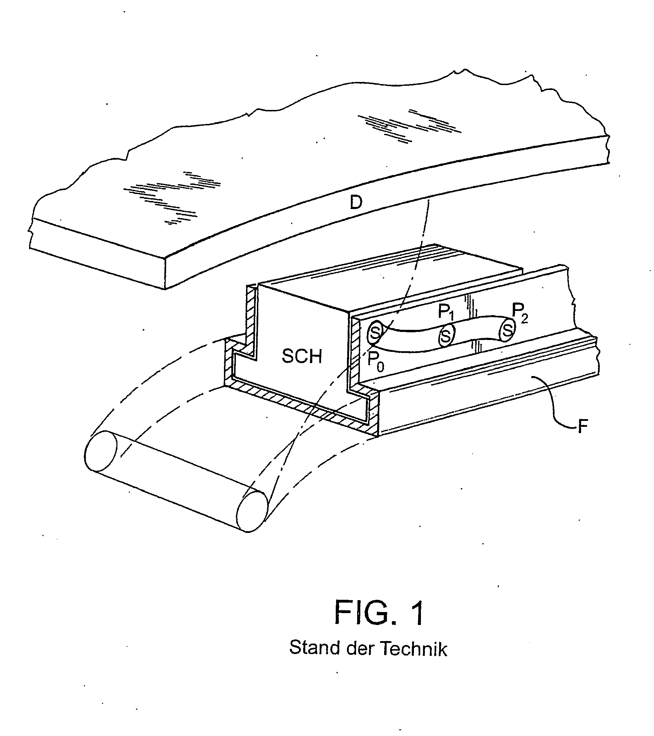

EP 0 154 759 beschreibt ein Hebeschiebedach mit konventioneller Schienen führung ohne abgeschrägten Querschnittsprofil in Querrichtung. Fig. 1 zeigt eine Deckelanhebekulisse nach dem Stand der Technik. Dabei wird der Deckel mittels eines Trägers angehoben, wobei die Bewegung des Trägers mittels eines Steuerbolzens S gesteuert wird, der in eine Führungskulisse eingreift. Durch die Bewegung eines Schlittens SCH, der unten Gleitvorsprünge aufweist, in einer Führungsschiene F wird der Steuerbolzen S dazu veranlasst dem gekrümmten Kurvenverlauf der Führungskulisse zu folgen und so die Anhebebewegung des Deckels D zu steuern.

Bei einer herkömmlichen Deckelanhebevorrichtung befindet sich die Kulissenführung an der Führungsschiene, sodass die Führungsschiene relativ viel Platz benötigt und eine relativ große Bauhöhe, insbesondere im Kopfbereich einer im Personenraum des Kraftfahrzeugs befindlichen Person aufweist. Besonders bei Spoilerdächern, die bevorzugt in Fahrzeugdächern von Fahrzeugcoupés eingesetzt werden, ist die Kopffreiheit designbedingt immer sehr eingeschränkt, sodass eine herkömmliche Führungsschiene innerhalb einer Deckelanhebevorrichtung eines in dem Coupé eingebauten Schiebedachs nicht einsetzbar ist, da keine ausreichende Kopffreiheit mehr gewährleistet wird.

Es ist daher die Aufgabe der vorliegenden Erfindung, ein Dachsystem eines Fahrzeugs mit einer Führungsschiene zum Führen eines Schlittens zu schaffen, die eine minimale Bauhöhe aufweist.

Diese Aufgabe wird erfindungsgemäß durch ein Dachsystem eines Fahrzeugs mit einer Führungsschiene zum Führen eines Schlittens in Längsrichtung eines Fahrzeugdaches geschaffen, wobei der Schlitten an einem oberen Ende einen Steuerbolzen aufweist, der in der Kulissenführung eines Deckelträgers zum Steuern einer Anhebebewegung eines daran angebrachten Deckels eingreift, wobei die Führungsschiene in Querrichtung des Fahrzeugs ein abgeschrägtes Querschnittsprofil aufweist.

Bei einer Ausführungsform des erfindungsgemäßen Dachsystems weist die Führungsschiene einen Kabelkanal zur Aufnahme eines mechanischen Antriebskabels für den Antrieb des Schlittens auf.

Bei einer Ausführungsform des erfindungsgemäßen Dachsystems weist der in der Führungsschiene geführte Schlitten zwei Arme auf, an die jeweils ein Steuerbolzen angebracht ist.

Dabei liegen die Steuerbolzen des Schlittens bei einer Ausführungsform einander gegenüber.

Bei einer alternativen Ausführungsform des erfindungsgemäßen Dachsystems sind die Steuerbolzen des Schlittens in Längsrichtung des Fahrzeugs zueinander versetzt angeordnet.

Bei einer Ausführungsform des erfindungsgemäßen Dachsystems weist der Schlitten Gleitvorsprünge auf, die durch die Führungsschiene geführt werden.

Bei einer Ausführungsform des erfindungsgemäßen Dachsystems weist die Führungsschiene in Querrichtung des Fahrzeugs einen Kanal zur Aufnahme einer Verriegelungsmechanik auf.

Bei einer möglichen Ausführungsform des erfindungsgemäßen Dachsystems verläuft das innen gelegene abgeschrägte Querschnittsprofil der Führungsschiene etwa in einem Winkel von 30° zu der Querrichtung des Fahrzeugs.

Im Weiteren werden bevorzugte Ausführungsformen des erfindungsgemäßen Dachsystems unter Bezugnahme auf die beigefügten Figuren zur Erläuterung erfindungswesentlicher Merkmale beschrieben.

Es zeigen:
- Figur 1: eine Deckelanhebevorrichtung nach dem Stand der Technik;
- Figur 2: eine Gesamtanordnung eines Dachsystems, bei dem die erfindungsgemäße Führungsschiene eingesetzt wird;
- Figur 3: eine Querschnittsansicht zur Darstellung einer möglichen Ausführungsform der erfindungsgemäßen Führungsschiene;
- Figur 4: eine perspektivische, teilweise geschnittene Ansicht einer möglichen Ausführungsform der erfindungsgemäßen Führungsschiene;
- Figur 5: eine perspektivische Teilansicht eines in der erfindungsgemäßen Führungsschiene geführten Schlittens;
- Fig. 6: eine perspektivische Ansicht einer möglichen Ausführungsform eines durch den in Fig. 5 dargestellten Schlittens anhebbaren Deckelträgers.

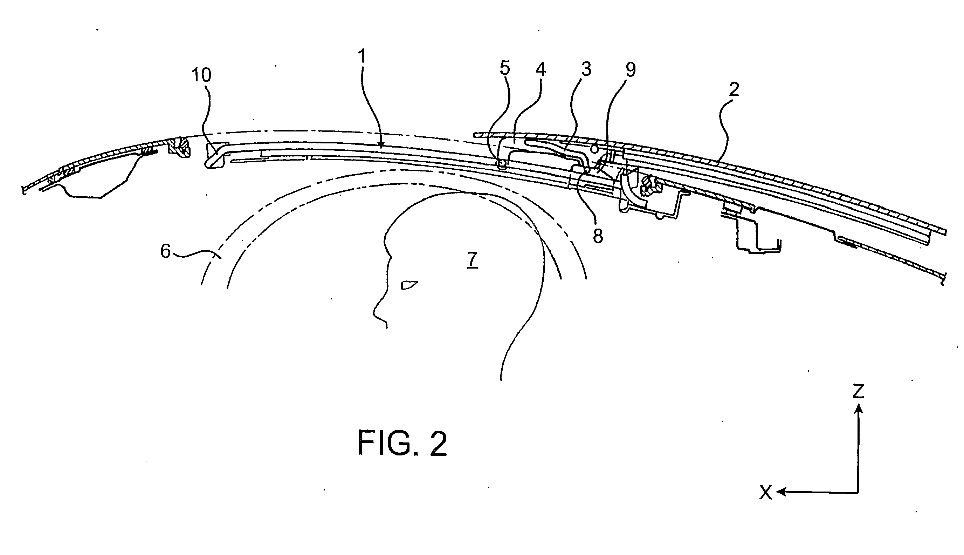

Wie man aus Fig. 2 erkennen kann, bildet die erfindungsgemäße Führungsschiene 1 einen Teil einen Teil eines Dachsystems, beispielsweise des in Fig. 2 dargestellten Spoilerdaches. Das Fahrzeugdach weist einen Fahrzeugdecke 2 auf, der in Fig. 2 in geöffneter Position dargestellt ist. Wie man aus Fig. 2 erkennen kann, befinden sich bei dem erfindungsgemäßen Dachsystem eine Kulissenführung 3 in einem Träger 4 des Fahrzeugdeckels 2. Der Träger 4 weist einen Trägerbolzen 5 auf, der in der Führungsschiene 1 bewegbar ist. Die Führungsschiene 1 verläuft in Längsrichtung bzw. x-Richtung des Kraftfahrzeugs oberhalb eines Kopfkreises 6 eines Kopfes 7 einer im Personenraum des Kraftfahrzeugs befindlichen Person. In der Kulissenführung 3 verläuft ein Steuerbolzen 8, der an einem Schlitten 9 angebracht ist. Der an dem Schlitten 9 angebrachte Steuerbolzen 8 verläuft in der Kulissenführung 3 des Dachträgers 4 und steuert die Anhebebewegung des Dachdeckels 2. Die Führungsschiene 1 weist in ihrem vorderen Ende einen ansteigenden Führungsschienenabschnitt 10, an dem der Trägerbolzen 5 zum Öffnen des Schiebedachs aus der geöffneten Ruhestellung bewegt wird.

Wie man aus Fig. 2 erkennen kann, ist die Kulissenführung für den Dachdeckel 2 nicht in der erfindungsgemäßen Führungsschiene 1 vorgesehen, sondern an dem Dachdeckelträger 4. Dies ermöglicht es, der Führungsschiene 1 ein besonderes Querschnittsprofil zu geben, welche der Bauhöhe mindert und so die Raumhöhe innerhalb des Personenraums erhöht.

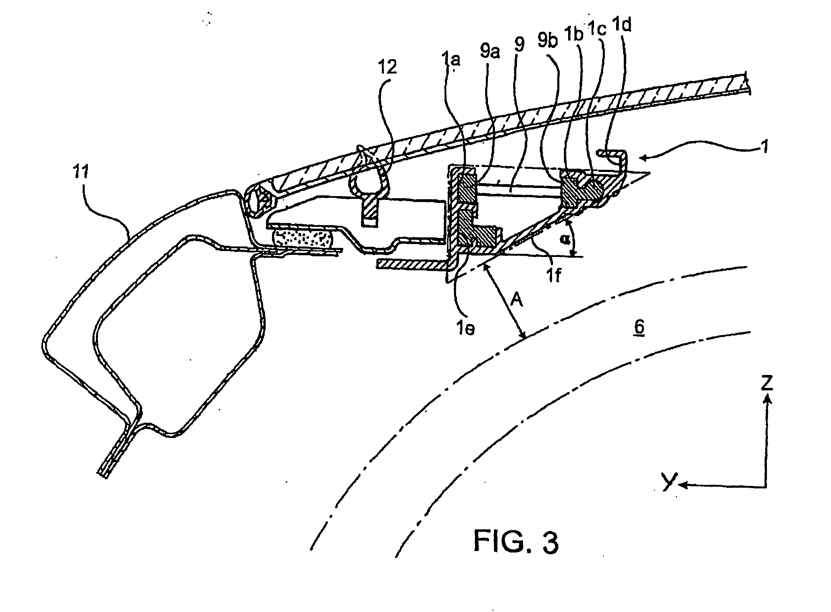

Fig. 3 zeigt eine Querschnittsansicht durch die erfindungsgemäße Führungsschiene 1 am Kopfkreis 6 der darunter sitzenden Person. Die in Fig. 3 dargestellte Querschnittsansicht zeigt einen Querschnitt durch die Führungsschiene 1 in Querrichtung bzw. in y-Richtung des Kraftfahrzeugs. Das Querschnittsprofil der Führungsschiene 1 ist im Wesentlichen dreieckförmig. Der Dachdeckel 2 liegt seitlich an einer Fahrzeugkarosserie 11 an. Man erkennt ferner in Fig. 3 eine Dichtung 12. Zwischen dem Kopfkreis 6 und der Führungsschiene 1 besteht ein Sicherheitsabstand A. Die Führungsschiene 1 verläuft in Längsrichtung bzw. x-Richtung des Kraftfahrzeugs. Die Führungsschiene 1 dient zum Führen des Schlittens 9. Der Schlitten 9 weist schematisch dargestellte Gleiter 9a, 9b auf, die in entsprechenden Führungskanälen 1 a, 1 b der Führungsschiene 1 gleitend bewegbar sind. Darüber hinaus weist die Führungsschiene 1 einen Kabelkanal 1c mit kreisrundem Querschnitt auf zur Aufnahme eines mechanischen Antriebskabels für den Antrieb des Schlittens 9. Bei der in Fig. 3 dargestellten Ausführungsform befindet sich der Antriebskabelkanal 1c der Führungsschiene 1 neben dem Führungskanal 1b zur Aufnahme des Gleitvorsprungs 1 b des Schlittens 9. Bei einer alternativen Ausführungsform kann der Kanal 1 c zur Aufnahme des Antriebskabels auch außen neben dem Führungskanal 1a der Führungsschiene 1 angebracht sein. Bei der in Fig. 3 dargestellten Ausführungsform ist über dem Antriebskanal 1c zur Aufnahme des Antriebskabels ein weiterer Kanal 1 d für den Sonnenschutz vorgesehen. Durch das Vorsehen des Kanals 1 d in diesem Bereich der Führungsschiene 1 wird der Sonnenschutz in einer maximalen Höhe geführt und die Breite der Führungsschiene 1 in Querrichtung bzw. in y-Richtung reduziert. Die Führungsschiene 1 weist ferner einen Kanal 1 e zur Aufnahme einer Verriegelung bzw. Verriegelungsstange oder einer Steuerung bzw. Verbindung für einen zusätzlichen mechanischen Antrieb hinten auf. Wie man aus Fig. 3 erkennen kann, weist die Führungsschiene 1 in Querrichtung bzw. y-Richtung des Kraftfahrzeugs innen ein abgeschrägtes Querschnittsprofil auf. Eine abgeschrägte Führungsschienenseite 1e liegt dem Kopfkreis 6 gegenüber und gewährleistet einen gleichmäßigen minimalen Sicherheitsabstand A zwischen dem Kopfkreis 6 und der Führungsschiene 1.

Diese Abschrägung der Führungsschiene 1 ist möglich, da im Innenbereich der Führungsschiene 1 erfindungsgemäß keine Kulissenführung wie bei herkömmlichen Führungsschienen vorgesehen ist und somit kein Bauraum für die Aufnahme einer Kulissenführung notwendig ist. Bei der erfindungsgemäßen Deckelanhebevorrichtung befindet sich die Kulissenführung am Deckel 2 des Schiebedachs und nicht im unteren Bereich der Führungsschiene 1. Dies ermöglicht es, erfindungsgemäß die Führungsschiene 1 ein besonderes Querschnittsprofil zu geben, durch welches der Abstand A zwischen der Führungsschiene 1 und dem Kopfkreis 6 maximiert wird. Die erfindungsgemäße Führungsschiene 1 gewährleistet eine minimale Bauhöhe in z-Richtung des Kraftfahrzeugs, d. h. senkrecht zur Fahrebene. Wie man aus Fig. 3 erkennen kann, verläuft die Wandung bzw. Seite 1e der Führungsschiene 1 in einem Winkel α von etwa 25° bis 45° relativ zu der Querrichtung y des Kraftfahrzeugs, beispielsweise in einem Winkel von 30°.

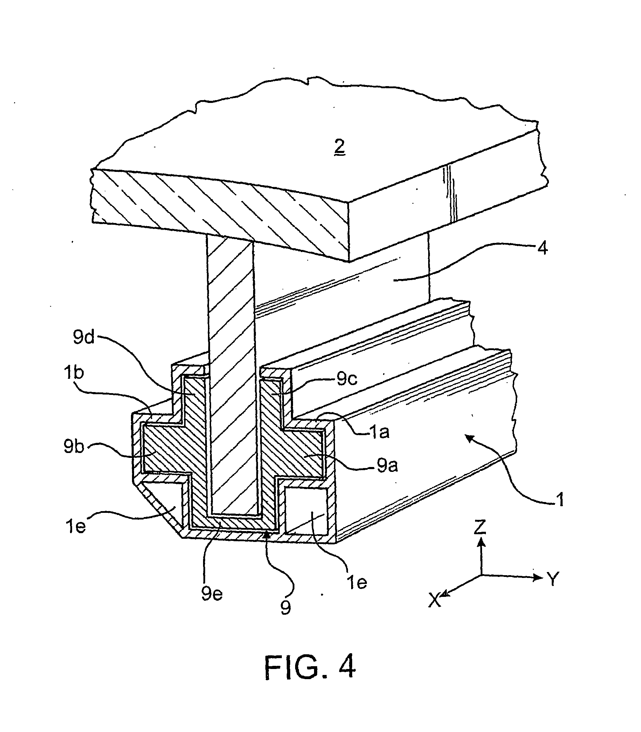

Fig. 4 zeigt eine mögliche Ausführungsform der erfindungsgemäßen Führungsschiene 1, in welcher ein Schlitten 9 läuft. Der Schlitten 9 dient zum Steuern der Anhebebewegung des Trägers 4, der an dem Schiebedachdeckel 2 angebracht ist.

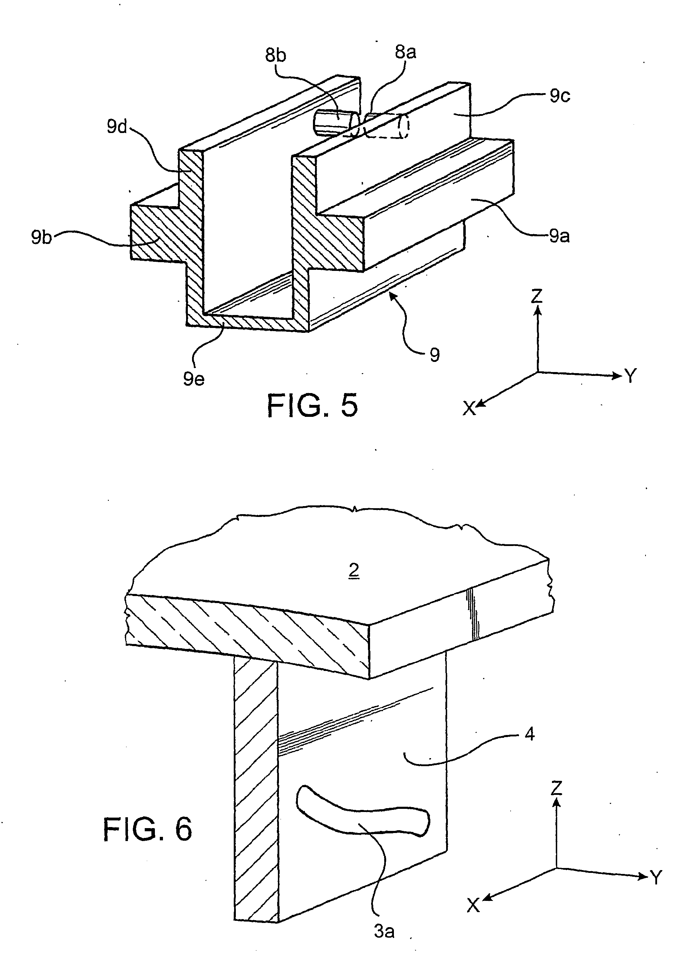

Fig. 5 zeigt eine perspektivische Ansicht des Schlittens 9. Der Schlitten 9 weist Steuerbolzen 8a, 8b auf, die in entsprechende Steuerkulissen 3a, 3b eingreifen. Diese Steuerkulissen 3a, 3b verlaufen innerhalb des Deckelträgers 4. Bei der in Fig. 5 dargestellten Ausführungsform liegen die Steuerbolzen 8a, 8b einander gegenüber. Bei einer alternativen Ausführungsform liegen die beiden Steuerbolzen 8a, 8b des Schlittens 9 in Längsrichtung x des Kraftfahrzeugs zueinander versetzt. Dies ermöglicht eine vereinfachte Montage der Steuerbolzen an den Schlitten. Der Schlitten 9 weist die Gleitvorsprünge 9a, 9b auf, die durch die Führungskanäle der Führungsschiene 1 geführt werden.

Fig. 6 zeigt eine mögliche Ausführungsform des Dachdeckelträgers 4, der fest mit dem Schiebedachdeckel 2 verbunden ist. In dem Deckelträger 4 verläuft eine Führungskulisse 3a, in welche der in Fig. 5 dargestellte Steuerbolzen 8a eingreifend bewegbar ist.

Wie man aus den Figuren 4 bis 6 erkennen kann, befindet sich die Kulissenführung im oberen Bereich der Führungsschiene, sodass auf der Unterseite der Führungsschiene 1 wenig Bauraum benötigt wird. Hierdurch ist es möglich, der Führungsschiene 1 in deren unteren Bereich, d. h. unterhalb der Gleitvorsprünge 9a, 9b, ein abgeschrägtes Querschnittsprofil zu geben, sodass der Abstand zwischen der Führungsschiene 1 und dem Kopfkreis 6 einer darunter sitzenden Person maximiert werden kann. Bei einer Ausführungsform der erfindungsgemäßen Führungsschiene 1 sind die Steuerbolzen 8a, 8b an zwei Armen 9c, 9d des Schlittens 9 angebracht, die sich ausgehend von den Gleitvorsprüngen 9a, 9b nach oben erstrecken. Ein U-förmiger unterer Abschnitt 9e des in der Führungsschiene 1 verlaufenden Schlittens 9 ist relativ schmal und umspannt den Träger 4, der beispielsweise eine Dicke von einigen Millimetern aufweist. Bei der erfindungsgemäßen Führungsschiene 1 liegt der Kanal 1 e zur Aufnahme der Verriegelungsmechanik außen, sodass auf der Innenseite der Führungsschiene 1 kein Bauraum mehr benötigt wird und somit eine Abschrägung des Führungsschienenprofils erfolgen kann. Bei der in Fig. 6 dargestellten Ausführungsform weist der Träger 4 ein rechteckiges Profil auf. Bei einer alternativen Ausführungsform verjüngt sich der Träger 4 ausgehend vom Dachdeckel 2 nach unten in z-Richtung, sodass die Führungsschiene 1 im unteren Bereich noch schmaler ausgelegt werden kann.

## Patentansprüche

1. Dachsystem eines Fahrzeugs, mit einer Führungsschiene (1) zum Führen mindestens eines Schlittens (9) in Längsrichtung (X) bei einem Fahrzeugdach,
wobei der Schlitten (9) an einem oberen Ende Steuerbolzen (8a, 8b) aufweist, die in Kulissenführungen (3a, 3b) eines Deckelträgers (4) zum Steuern einer Anhebebewegung eines daran angebrachten Deckels (2) eingreifen,
wobei die Führungsschiene (1) in montiertem Zustand in Querrichtung (y) des Fahrzeugs innen ein abgeschrägtes Querschnittsprofil (1e) aufweist.

2. Dachsystem nach Anspruch 1,
wobei die Führungsschiene (1) einen Kabelkanal (1c) zur Aufnahme eines mechanischen Antriebskabels für den Antrieb des Schlittens (9) aufweist.

3. Dachsystem nach Anspruch 2,
wobei der Schlitten (9) zwei Arme (9c, 9d) aufweist, an die jeweils ein Steuerbolzen (8a, 8b) angebracht ist.

4. Dachsystem nach Anspruch 3,
wobei die Steuerbolzen (8a, 8b) des Schlittens (9) einander gegenüberliegend angeordnet sind.

5. Dachsystem nach Anspruch 3,
wobei die Steuerbolzen (8a, 8b) des Schlittens (9) in Längsrichtung (x) des Fahrzeugs zueinander versetzt angeordnet sind.

6. Dachsystem nach Anspruch 1,
wobei der Schlitten (9) Gleitvorsprünge (9a, 9b) aufweist, die durch Führungskanäle (1a, 1b) der Führungsschiene (1) geführt werden.

7. Dachsystem nach Anspruch 1,
wobei die Führungsschiene in Querrichtung (y) des Fahrzeugs einen Kanal (1e) zur Aufnahme einer Verriegelungsmechanik aufweist.

8. Dachsystem nach Anspruch 1,
wobei das innen gelegene abgeschrägte Querschnittsprofil der Führungsschiene (1) in einem Winkel von etwa 25° bis 45° zu der Querrichtung (y) des Fahrzeugs nach oben verläuft.

9. Dachsystem nach Anspruch 1,
wobei das Querschnittsprofil der Führungsschiene (1) dreieckförmig ist.

## Claims

1. Roof system of a vehicle, with a guide rail (1) for guiding at least one slide (9) in the longitudinal direction (X) in a vehicle roof,
wherein the upper end of the slide (9) has control pins (8a, 8b) which engage in slotted guide mechanisms (3a, 3b) of a cover carrier (4) in order to control a raising movement of a cover (2) which is attached thereto,
wherein, in the fitted state, the guide rail (1) has a bevelled cross-sectional profile (1e) on the inside in the transverse direction (y) of the vehicle.

2. Roof system according to Claim 1, wherein the guide rail (1) has a cable channel (1c) for receiving a mechanical driving cable for driving the slide (9).

3. Roof system according to Claim 2, wherein the slide (9) has two arms (9c, 9d) to which respective control pins (8a, 8b) are attached.

4. Roof system according to Claim 3, wherein the control pins (8a, 8b) of the slide (9) are arranged opposite each other.

5. Roof system according to Claim 3, wherein the control pins (8a, 8b) of the slide (9) are arranged offset with respect to each other in the longitudinal direction (x) of the vehicle.

6. Roof system according to Claim 1, wherein the slide (9) has sliding projections (9a, 9b) which are guided by guide channels (1a, 1b) of the guide rail (1).

7. Roof system according to Claim 1, wherein the guide rail has a channel (1e) in the transverse direction (y) of the vehicle for receiving a locking mechanism.

8. Roof system according to Claim 1, wherein the bevelled cross-sectional profile, which is positioned on the inside, of the guide rail (1) runs upwards at an angle of approximately 25° to 45° with respect to the transverse direction (y) of the vehicle.

9. Roof system according to Claim 1, wherein the cross-sectional profile of the guide rail (1) is triangular.

## Revendications

1. Système de toit d'un véhicule, comprenant un rail de guidage (1) pour guider au moins un chariot (9) dans la direction longitudinale (X) du toit d'un véhicule,
dans lequel le chariot (9) présente des boulons de commande (8a, 8b) au niveau d'une extrémité supérieure, lesquels s'engagent dans des guides à coulisse (3a, 3b) d'un support de couvercle (4) pour commander un mouvement de soulèvement d'un couvercle (2) monté sur ce dernier,
dans lequel le rail de guidage (1), à l'état monté, présente dans la direction transversale (Y) du véhicule à l'intérieur un profil en section transversale (1e) chanfreiné.

2. Système de toit selon la revendication 1,
dans lequel le rail de guidage (1) présente un conduit de câble (1c) pour recevoir un câble d'entraînement mécanique pour l'entraînement du chariot (9).

3. Système de toit selon la revendication 2,
dans lequel le chariot (9) présente deux bras (9c, 9d), sur lesquels est monté à chaque fois un boulon de commande (8a, 8b).

4. Système de toit selon la revendication 3,
dans lequel les boulons de commande (8a, 8b) du chariot (9) sont disposés en regard l'un de l'autre.

5. Système de toit selon la revendication 3,
dans lequel les boulons de commande (8a, 8b) du chariot (9) sont disposés de manière décalée l'un par rapport à l'autre dans la direction longitudinale (X) du véhicule.

6. Système de toit selon la revendication 1,
dans lequel le chariot (9) présente des saillies de glissement (9a, 9b) qui sont guidées par des conduits de guidage (1a, 1b) du rail de guidage (1).

7. Système de toit selon la revendication 1,
dans lequel le rail de guidage présente, dans la direction transversale (Y) du véhicule, un conduit (1e) pour recevoir un mécanisme de verrouillage.

8. Système de toit selon la revendication 1,
dans lequel le profil en section transversale chanfreiné, situé à l'intérieur, du rail de guidage (1) s'étend vers le haut suivant un angle d'environ 25 ° à 45 ° par rapport à la direction transversale (Y) du véhicule.

9. Système de toit selon la revendication 1,
dans lequel le profil en section transversale du rail de guidage (1) est de forme triangulaire.
